# FASCICULE DE BREVET EUROPEEN

(11) **EP 1 113 730 B1**
(45) Date de publication et mention de la délivrance du brevet: **14.05.2003**
(21) Numéro de dépôt: 00949682.9
(22) Date de dépôt: 07.07.2000
(51) Int. Cl.: A42B 3/32, A42B 3/04

(54) **CASQUE MODULAIRE**
MODULARER HELM
MODULAR HELMET

(30) Priorité: 13.07.1999 FR 9909097
(43) Date de publication de la demande: 11.07.2001
(73) Titulaire: THALES AVIONICS S.A., 78141 Vélizy Villacoublay Cédex (FR)
(72) Inventeur: BATAILLE, Alexandre Thomson-CSF Propriété Intel., 94117 Au rcueil Cedex (FR); LARET, Daniel, Thomson-CSF Propriété Intel., 4117 Au rcueil Cedex (FR); DUPIN, Catherine, Thomson-CSF Propriété Intel., 94117 Au rcueil Cedex (FR)
(74) Mandataire: Chaverneff, Vladimir
(86) Numéro de dépôt international: FR0001976
(87) Numéro de publication internationale: WO01003534

(56) Documents cités:
- EP-A- 0 296 961
- EP-A- 0 671 132
- EP-A- 0 704 173
- WO-A-94/14349
- DE-U- 7 923 127
- US-A- 3 991 422

## Description

La présente invention se rapporte à un casque modulaire à montage simplifié et résistant aux contraintes aérodynamiques, et en particulier à un casque destiné aux pilotes d'avions d'armes. Le document EP-A-0 704 173 décrit un casque modulaire selon le préambule de la revendication 1.

Le qualificatif de "modulaire " signifie ici que le casque est du type à deux sous-ensembles principaux, à savoir un "casque de base" assurant la protection physiologique de l'utilisateur, et un "module", coiffant le casque de base et assurant plusieurs fonctions détaillées ci-dessous.

La partie "casque de base" assure les fonctions suivantes : rétention du casque (à l'aide d'une sangle jugulaire par exemple), support des équipements audio du casque, protection aux chocs et à la perforation, support du "module", protection contre le feu, support du masque à oxygène....

La partie module supporte, entre autres, des appareils assurant les fonctions suivantes : fonction de présentation d'informations (jumelles de vision nocturne, viseur de casque...), fonction de senseurs (par exemple capteur électromagnétique d'orientation de tête, caméra de restitution d'environnement visuel...), fonctions diverses (visière, capotage...).

L'avantage d'une telle conception modulaire est de pouvoir utiliser le casque de base (qui peut être personnalisé) comme plate-forme de montage de modules différents en fonction des types de missions accomplies par l'utilisateur (vol de jour, vol de nuit, reconnaissance, combat...). Par contre, les difficultés liées à l'utilisation de ce type de casque sur un avion de chasse tiennent aux compromis à réaliser. En effet, il faut pouvoir :
- positionner précisément le module par rapport à la tête de l'utilisateur pour que les informations visuelles lui soient présentées de façon à coïncider avec son axe visuel ;
- isoler le module (qui est rigide pour des raisons de précision et de stabilité) du casque de base (qui est souple, afin de pouvoir être facilement chaussé par l'utilisateur et de ne pas le gêner) ;
- conserver l'intégrité du casque lors d'une éjection à grande vitesse (jusqu'à 625 KEAS). Cette exigence est contraignante, car les viseurs de casque se caractérisent par des positions de visière très avancées qui augmentent les efforts aérodynamiques à l'éjection ;
- assurer une modularité aisée sur le lieu d'utilisation, sans aucun élément perdable, et manipulable sans outil ;
- obtenir une masse totale la plus faible possible.
Les solutions connues ne remplissent pas toutes ces conditions.

En effet, ces solutions, qui peuvent être classées en deux groupes consistent essentiellement :
- soit à renforcer la tenue du module en lui ajoutant de la matière, soit à fixer le module sur le casque de base par vissage classique. Ces solutions connues présentent les inconvénients suivants :
- la première rend le casque très lourd et décentré vers l'avant, et ne garantit pas que le module restera solidaire du casque de base qui peut se déformer sous l'effet du "windblast" lors de l'éjection de l'utilisateur.
- la deuxième ne remplit pas les exigences d'isolement des deux parties du casque et de non-utilisation d'outil.

La présente invention a pour objet un casque du type précité qui remplisse toutes les conditions exposées ci-dessus et dont le prix de revient ne soit pas plus élevé que celui des casques connus.

Le casque conforme à l'invention, du type à casque de base et module, comporte trois dispositifs de liaison entre le casque de base et le module, ces dispositifs de liaison se présentant sous forme de doigts solidaires du module et s'engageant dans des douilles correspondantes du casque de base, deux de ces dispositifs de liaison étant disposés latéralement et assurant une liaison avec un jeu longitudinal et un étant disposé près du sommet du casque et assurant une liaison fixe en translation.

La présente invention sera mieux comprise à la lecture de la description détaillée d'un mode de réalisation, pris à titre d'exemple non limitatif et illustré par le dessin annexé, sur lequel :
- la figure 1 est une vue en coupe simplifiée d'un casque assemblé conforme à l'invention,
- la figure 2 est une vue en coupe simplifiée du casque de la figure1, le module étant séparé du casque de base,
- la figure 3 est la même vue que celle de la figure 1 illustrant un degré de liberté du module par rapport au casque de base,
- la figure 4 est une vue partielle en coupe d'un des dispositifs de liaison entre le module et le casque de base selon l'invention,
- les figures 5 et 6 sont des vues en perspective du dispositif de liaison de la figure 4, respectivement à l'état désassemblé et à l'état assemblé,
- la figure 7 est une vue en coupe du dispositif de liaison de la figure 4, mais représenté de façon plus complète, et
- les figures 8 et 9 sont des vues en perspective selon deux points de vue différents du module du casque de l'invention montrant, en particulier, le dispositif supérieur de liaison respectivement en position déverrouillée et en position verrouillée.

Sur les différentes figures du dessin, on n'a représenté que les éléments du casque nécessaires à la compréhension de l'invention. Ainsi, pour une meilleure lisibilité de ces figures, on n'a pas représenté des éléments tels que les appareils optiques et optoélectroniques (jumelles de vision nocturne, viseur,...) fixés au module, ni les divers éléments pouvant être fixés au casque de base (jugulaire, équipements audio, masque à oxygène...).

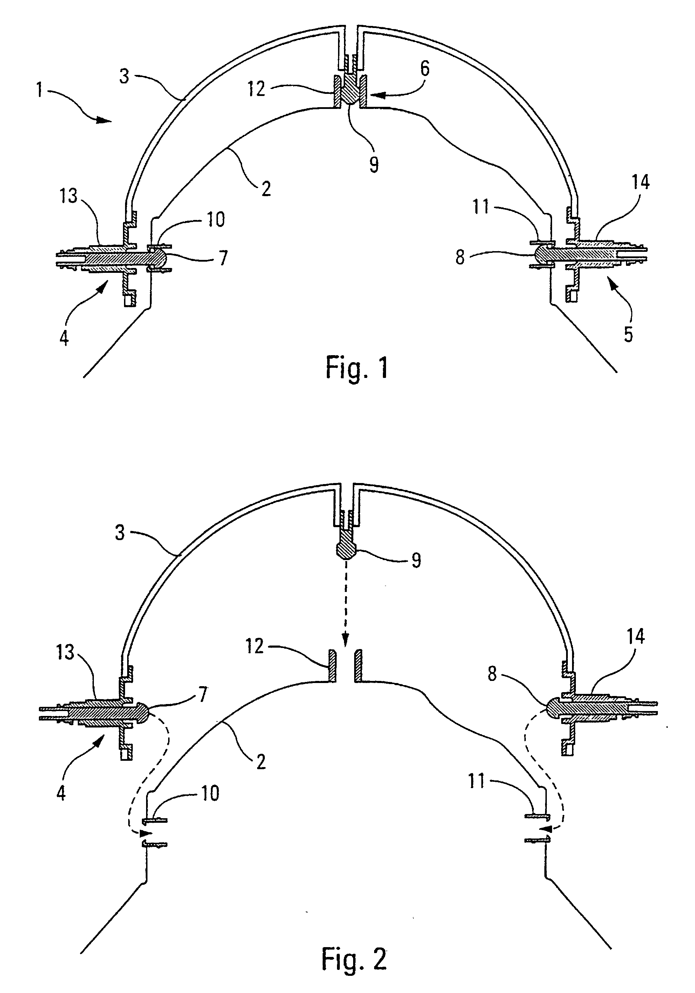

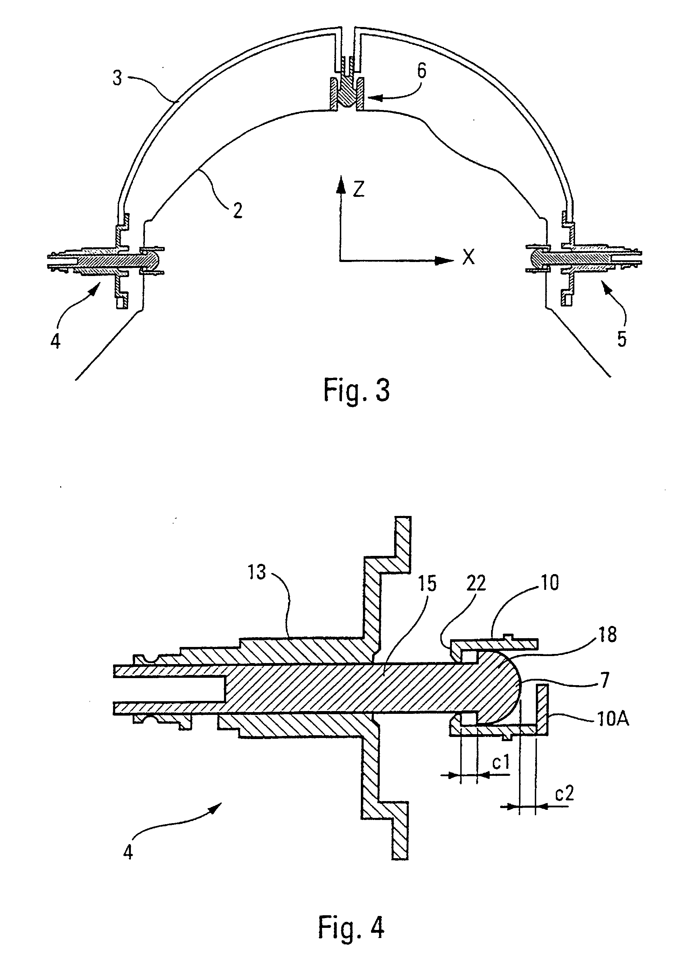

Comme représenté de façon très simplifiée en figures 1 à 3, le casque 1 conforme à l'invention comporte essentiellement un casque de base 2 en contact avec la tête de l'utilisateur et un module 3 entourant à distance le casque de base et fixé à ce dernier à l'aide de trois dispositifs de liaison 4 à 6, solidaires du module 3 et facilement assemblables et désassemblables par rapport au casque de base 2. Les dispositifs de liaison 4 et 5 sont disposés latéralement, au niveau de l'axe d'articulation des visières du casque (visière claire et visière teintée), ont leurs axes confondus et sont rétractables vers l'extérieur. Le dispositif de liaison 6 est disposé au sommet du casque (ou près de ce sommet). Les dispositifs de liaison 4 à 6, décrits plus en détail ci-dessous en référence aux figures 4 à 6, se présentent sous forme de doigts 7 à 9 s'engageant dans des alésages de douilles 10 à 12 respectivement, faisant partie du casque de base 2. Les doigts 7 et 8 peuvent se déplacer dans des embases de support 13,14 fixées au module 3, et sont verrouillables dans ces embases et dans les douilles 10 et 11 lorsque le module 3 est en place sur le casque de base, en permettant toutefois un jeu latéral nécessaire à la déformation du casque de base par rapport au module, comme décrit ci-dessous en référence à la figure 4. Le montage du module sur le casque de base s'effectue simplement en introduisant le doigt 9 dans l'alésage de la douille 12, les doigts 7 et 8 étant rétractés. Ensuite, on positionne correctement le module par rapport au casque de base, en particulier pour que les doigts 7 et 8 soient face aux alésages des douilles 10 et 11, et on enfonce ces doigts tout en les verrouillant en position enfoncée de la manière décrite ci-dessous.

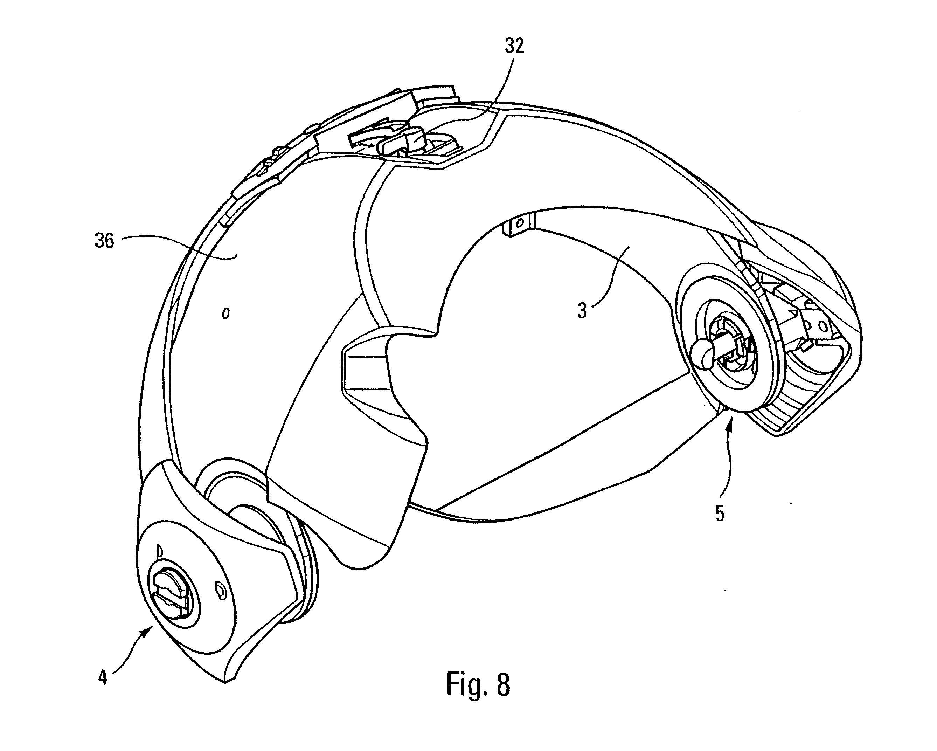

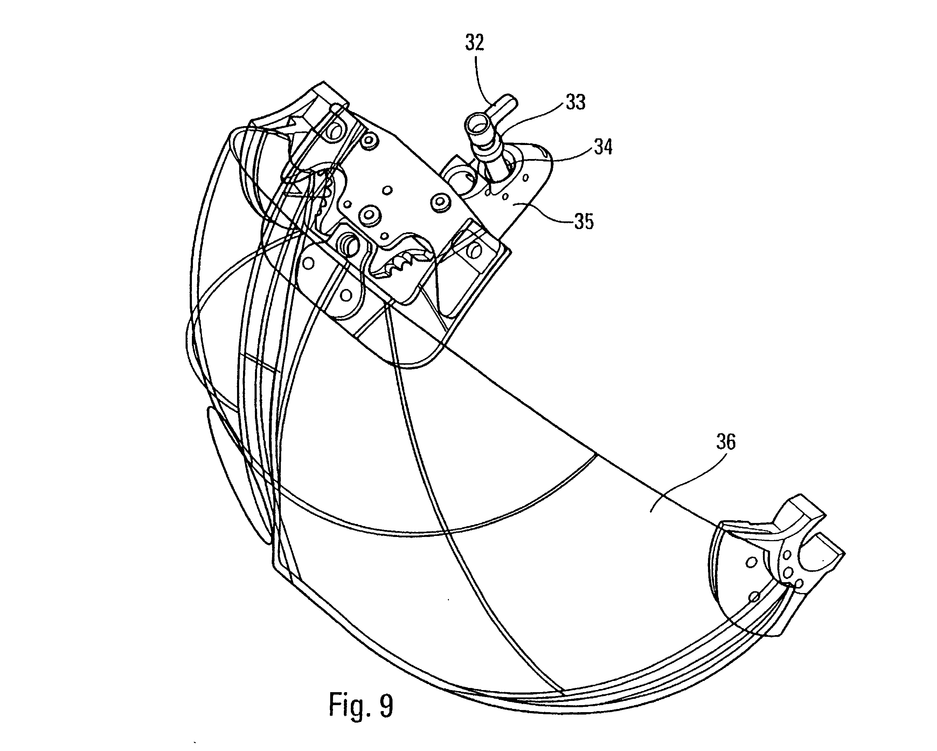

Comme on le voit d'après les figures 3 et 4, lorsque le module 3 est assemblé avec le casque de base 2, et que les doigts 7 et 8 sont verrouillés en position enfoncée, il subsiste un jeu entre le module et le casque de base, ce qui permet un léger mouvement relatif entre eux selon la direction marquée "x" (direction parallèle à l'axe de rotation des visières), ce qui assure la relative indépendance recherchée de ces deux parties du casque lorsqu'elles sont assemblées. Par contre, le doigt 9 est bloqué en translation (comme décrit ci-dessous en référence aux figures 8 et 9), mais peut effectuer une légère rotation par rapport au casque de base, autour de son axe.

Toutefois, une telle caractéristique ne garantit pas la tenue du casque au "windblast" (vent relatif lors de l'éjection de l'utilisateur de son avion). En effet, avec les dispositifs de liaison ci-dessus, le module, qui est soumis à la majeur partie des efforts aérodynamiques (notamment à cause des visières, qui ont une surface relativement importante) supporte seul la plupart des sollicitations liées au vent relatif lors d'une éjection. Le comportement principal du module est alors une déformation latérale et le module est soumis à un effort de portance tendant à l'arracher vers le haut. Selon l'invention, afin de ne pas augmenter la masse du module, ces efforts sont reportés sur le casque de base (qui est maintenu sur la tête de l'utilisateur par la sangle jugulaire) afin de soulager ce module. Ceci est obtenu grâce au fait qu'au bout d'une faible course latérale dans un sens ou dans l'autre du module, l'un des doigts 7 ou 8 vient en butée sur la douille 10 ou 11 comme illustré de façon simplifiée en figure 4. Sur cette figure 4, on a représenté un des dispositifs latéraux de liaison entre module et casque de base, par exemple le dispositif 4. Sur cette figure 4, on a représenté la douille 10 fixée au casque de base 2, l'embase 13 fixée au module 3 et le doigt 7 de liaison (sans sa manette de manoeuvre, qui est représentée sur les figures suivantes).

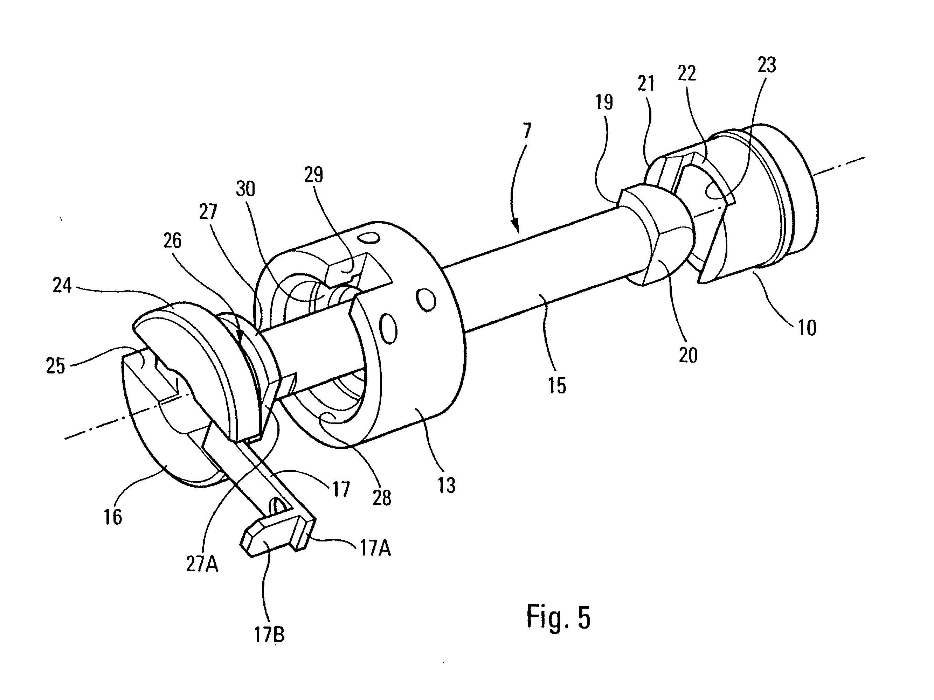

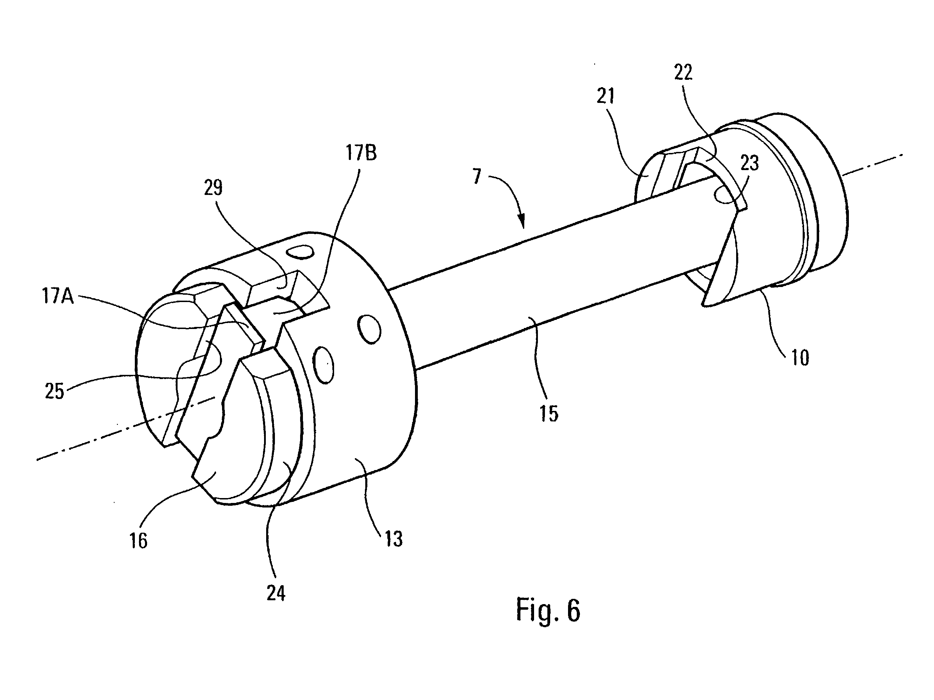

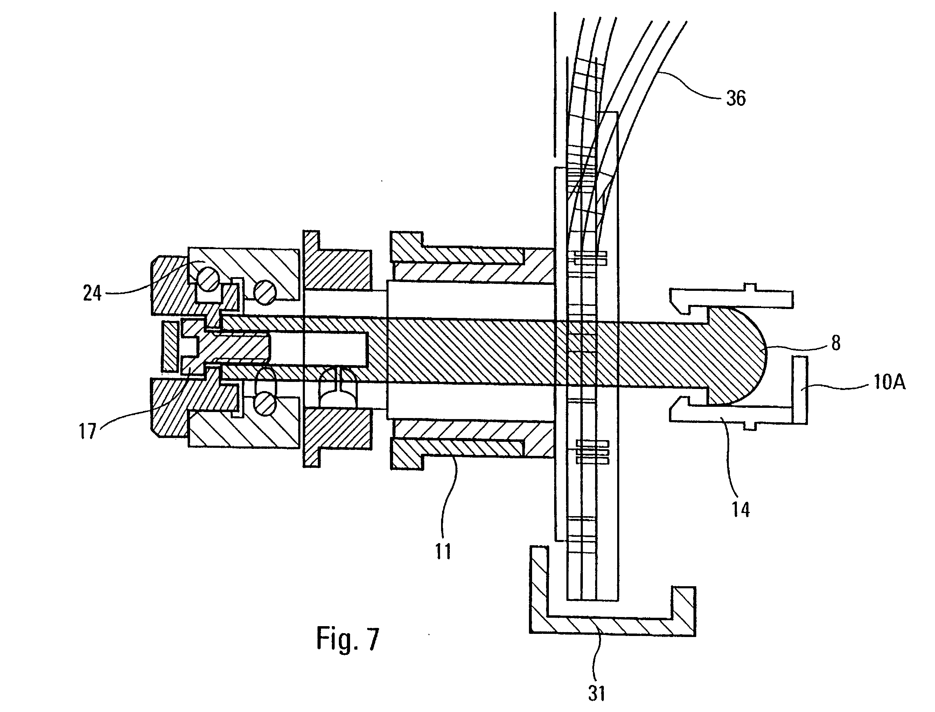

Le doigt 7 a un corps 15 en forme de tige cylindrique qui peut se déplacer en rotation et en translation dans l'embase 13. L'extrémité du corps 15 qui est dirigée vers l'extérieur du module est fendue pour permettre d'y fixer (voir figure 7) la platine support 16 de la manette de manoeuvre 17 représentée en figures 5 et 6. L'autre extrémité du corps 15 se termine par une tête 18 de forme sensiblement hémisphérique, d'un diamètre supérieur à celui du corps 15. Sur la surface de l'hémisphère, on pratique deux méplats 19,20 parallèles entre eux, et la distance entre ces méplats est légèrement supérieure au diamètre du corps 15. La tête 18 est destinée à être introduite dans la douille 10 et à y être verrouillée. A cet effet, la douille 10, qui a une forme générale annulaire, a une partie antérieure 21 (celle faisant face à l'embase 13) présentant une ouverture à section de forme oblongue complémentaire de celle de la section de la tête 18 (ouverture ayant une section à deux côtés parallèles à écartement égal à celui des méplats 19,20 et se terminant par des arcs de cercle). Le fond de la partie antérieure 21 est constitué par une paroi transversale 22 percée d'une ouverture 23 dont la section a une forme complémentaire de celle de la section de la tête 18. Le corps de la douille 10, à l'arrière de la paroi 22, est alésé à un diamètre sensiblement égal au diamètre de la tête 18 avant formation des méplats.

Ainsi, pour verrouiller le doigt 7 dans la douille 10, on introduit la tête 18 dans l'ouverture de la partie 21 en alignant les méplats 19,20 avec les côtés plans de l'ouverture de la partie 21, puis en enfonçant la tête 18 dans la douille, et lorsque la tête 18 a dépassé la paroi 22, on lui fait effectuer une rotation d'un quart de tour. La tête 18 ne peut alors plus être retirée de la douille 10 tant qu'on ne lui fait pas effectuer une autre rotation d'un quart de tour. Comme précisé ci-dessus, afin de permettre au module un léger débattement latéral, on prévoit un jeu de longueur C1 d'environ 1mm entre le bord antérieur de la tête 18 et le bord postérieur de la paroi 22 de la douille 10 (voir figure 4) et un jeu C2 (d'environ 4 à 5 mm) entre le sommet de la tête 18 et une butée 10A fixée au fond de la douille 10, et il en est de même pour le dispositif de liaison 5, lorsque le module est fixé en place sur le casque de base. La longueur du doigt 7 et sa course sont déterminées afin de permettre d'obtenir les jeux de longueurs C1 et C2. Ces jeux de débattement latéral permettent au module de venir très rapidement au contact des butées du casque en cas de « windblast », et permettent à l'utilisateur de « chausser » plus aisément son casque sur la tête (le casque de base étant souple). Ce jeu de débattement latéral permet un jeu plus important, par effet de levier, au niveau des écouteurs du casque (plusieurs cm), qui sont bien plus bas que l'axe des doigts 7 et 8.

Pour manoeuvrer le doigt 7 et pour bloquer sa tête en position verrouillée dans la douille 10, on réalise l'embase 13, la platine 16 et la manette 17 de la façon représentée en figures 5 et 6 en particulier. La platine 16 a une forme générale de tronc de cylindre présentant successivement, le long de son axe, trois diamètres différents. A son extrémité libre 24 (celle qui est dirigée vers l'extérieur du casque), la platine 16 présente son diamètre le plus grand. Une saignée diamétrale 25 est pratiquée dans la face frontale de l'extrémité 24, et elle fait office de logement de la manette 17 qui y est articulée. En position de manoeuvre du doigt 7 (figure 5), la manette 17 est dépliée hors de la saignée 25 qu'elle prolonge radialement vers l'extérieur de la platine. En position repliée (figure 6), la manette 17 est logée dans la saignée 25. Seule l'extrémité libre 17A de cette manette dépasse alors radialement de cette saignée, afin de permettre de la sortir de cette saignée. La manette 17 comporte une languette de manoeuvre 17B s'étendant perpendiculairement au corps de la manette près de l'extrémité 17A. La section centrale de la platine 16 est celle ayant le plus petit diamètre, et son autre extrémité 27 a un diamètre intermédiaire entre ceux des deux autres parties de la platine. On pratique sur cette extrémité 27 deux méplats parallèles entre eux et à un diamètre (seul l'un de ces deux méplats, référencé 27A est visible en figure 5).

L'embase 13, de forme générale annulaire, comporte intérieurement une cuvette 28 dont le diamètre intérieur est égal au diamètre extérieur de la partie 24 de la platine 16 et dont la profondeur est légèrement inférieure à la longueur axiale de la partie 24. On pratique dans la paroi latérale de la cuvette 28 une encoche de détrompage 29 servant de logement à la languette 17B de la manette 17 lorsque celle-ci est repliée et que la tête 18 est verrouillée dans la douille 10. La paroi 30 du fond de la cuvette 28 est percée d'une ouverture dont la section a une forme complémentaire de celle de la partie 27 de la platine 16. Les parties rectilignes de la forme de cette ouverture sont orientées angulairement de façon que lorsque la partie 27 pénètre dans cette ouverture, les méplats 19 et 20 de la tête 18 soient parallèles aux côtés parallèles de l'ouverture 23 de la douille 10, et que la tête 18 puisse donc être introduite dans la douille 10. L'épaisseur de la paroi 30 est égale à la longueur axiale de la gorge 26 de la platine 16. La longueur du corps du doigt 7 est telle que lorsque la partie 24 de la platine 16 est en butée contre la paroi 30, la tête 18 est entièrement engagée derrière la paroi 22 ». Pour bloquer le doigt 7, il suffit alors de le tourner, à l'aide de la manette 17, d'un quart de tour (dans le sens des aiguilles d'une montre dans le cas de la position initiale d'introduction de la figure 5). Après cette rotation, la partie 27 de la platine 16 est verrouillée en translation longitudinale par la paroi 30, et la tête 18 est verrouillée en translation longitudinale par la paroi 22 tandis que la manette 17 peut être repliée dans la saignée 25 et que sa languette 17B vient se loger dans l'encoche 29, immobilisant en rotation le doigt 7. Bien entendu, la manette 17 est munie de moyens appropriés (par exemple une lame-ressort) qui la maintiennent en position repliée, et qui ne l'autorisent à être dépliée que par l'utilisateur lorsqu'il en tire l'extrémité 17A.

Selon une caractéristique avantageuse de l'invention et illustrée en figure 7, on fixe sur le casque de base, près des extrémités du module et des visières, au niveau des doigts 7 et 8, des butées. Seule la butée 31, relative au doigt 8 a été représentée. Ces butées sont en forme d'étrier à section en « U ». La butée 31 est un dispositif complémentaire à la butée sur la douille 14 (voir figure 7). En effet, une fois le doigt 8 en butée sur la douille 14, l'ensemble du module peut se déformer (sous l'effet du vent relatif lors de l'éjection) et donc engendrer des moments sur le doigt 8. Comme le doigt 8 est semi-sphérique, il ne reprend pas les rotations donc les moments de rotation autour du centre de la sphère. C'est pourquoi, il a été prévu une deuxième butée désaxée qui permet de limiter cette rotation. La butée 31 est solidaire du casque de base et inamovible. Le module se monte en enfichant d'abord le doigt central 9. Ensuite, le module et basculé d'avant en arrière et les mécanismes latéraux viennent se loger derrière la butée 31. Ensuite, on enfonce les doits 7 et 8. Ces butées 31 sont mises en place automatiquement sans gêner le montage du module sur le casque de base.

On a représenté en figures 8 et 9 le levier de commande 32 du doigt supérieur 9. On forme sur le doigt 9, sous le levier 32, un disque 33 comportant deux méplats périphériques parallèles entre eux. Ce disque 33 passe dans une ouverture 34 de forme correspondante pratiquée dans le support 35 du doigt 9 (support fixé sur le module 3) lorsque ce doigt est correctement orienté angulairement et est enfoncé. Lorsque le doigt 9 est en place, on le tourne d'un quart de tour à l'aide du levier 32, et le disque 33 se trouve bloqué sous l'ouverture 34, de façon similaire au verrouillage des doigts 7 et 8. Bien entendu, on prévoit des moyens d'immobilisation en rotation (non représentés) du doigt 9, qui ne peuvent être débloqués que par l'utilisateur, afin d'empêcher tout déverrouillage accidentel du doigt 9.

En position déverrouillée du doigt 9, son levier 32 empêche la remontée de la visière (figure 8), cette visière ne pouvant être remontée que lorsque le doigt 9 est verrouillé (figure 9), ce qui constitue un dispositif de sécurité signalant à l'utilisateur que le module n'est pas bien assemblé au casque de base. Ce dispositif de sécurité est complété par l'indication visuelle assurée par les manettes 17 des doigts 7 et 8 : ces manettes ne peuvent être repliées et rangées dans les saignées 25 que si les doigts 7 et 8 sont correctement verrouillés dans les douilles 10, 11.

Comme représenté en particulier en figures 7 et 8, l'axe d'articulation des visières peut être confondu avec l'axe commun des doigts 7 et 8, ce qui rend compact le dispositif de l'invention. Ceci permet de reporter les efforts aérodynamiques appliqués aux visières lors de l'éjection sur le casque de base par l'intermédiaire des doigts 7 et 8 sans aucun déport, et donc de diminuer la masse de l'ensemble du casque.

## Revendications

1. Casque modulaire à montage simplifié, du type comportant un casque de base souple (2) fixé sur la tête de l'utilisateur et un module rigide (3) coiffant le casque de base, comportant trois dispositifs de liaison (4, 5, 6) entre le casque de base et le module, ces dispositifs de liaison se présentant sous forme de doigts (7, 8, 9) solidaires du module et s'engageant dans des douilles correspondantes (10, 11, 12) fixées au casque de base, deux de ces dispositifs de liaison (4, 5) étant disposés latéralement, et un autre (6) étant disposé près du sommet du casque, **caractérisé en ce que** les trois dispositifs de liaison comportent un dispositif de blocage en translation par rapport au module rigide, du type quart-de-tour, que les deux dispositifs de liaison latéraux assurent une liaison avec jeu longitudinal, et que le troisième assure une liaison fixe en translation.

2. Casque selon la revendication 1, **caractérisé par le fait que** le jeu longitudinal (C1, C2) est d'environ 1 mm dans un sens et d'environ 4 à 5 mm dans l'autre sens.

3. Casque selon l'une des revendications précédentes, **caractérisé par le fait que** les extrémités (18) des doigts latéraux comportent un dispositif de blocage en translation du type quart-de-tour (19-20-22).

4. Casque selon l'une des revendications précédentes, **caractérisé par le fait qu'**en position déverrouillée, le doit supérieur empêche toute remontée des visières du casque (36).

5. Casque selon l'une des revendications précédentes, **caractérisé par le fait qu'**en position verrouillée, les doigts sont immobilisés en rotation.

6. Casque selon l'une des revendications précédentes, **caractérisé par le fait qu'**il comporte deux doigts latéraux dont les axes sont confondus avec ceux des visières.

## Claims

1. Simplified-fitting modular helmet, of the type comprising a flexible base helmet (2) fixed on the head of the user and a rigid module (3) overlying the base helmet, comprising three linking devices (4, 5, 6) between the base helmet and the module, these linking devices taking the form of fingers (7, 8, 9) secured to the module and engaging in corresponding sockets (10, 11, 12) fixed to the base helmet, two of these linking devices (4, 5) being disposed laterally, and another (6) being disposed near the apex of the helmet, **characterized in that** the three linking devices comprise a device for translational locking with respect to the rigid module, of the quarter of a revolution type, that the two lateral linking devices effect a link with longitudinal clearance, and that the third effects a translationally fixed link.

2. Helmet according to Claim 1, **characterized in that** the longitudinal clearance (C1, C2) is around 1 mm in one direction and around 4 to 5 mm in the opposite direction.

3. Helmet according to one of the preceding claims, **characterized in that** the ends (18) of the lateral fingers comprise a device for translational locking of the quarter of a revolution type (19-20-22).

4. Helmet according to one of the preceding claims, **characterized in that** in the unlatched position the upper finger completely prevents the visors of the helmet (36) from being raised.

5. Helmet according to one of the preceding claims, **characterized in that** in the latched position the fingers are rotationally immobilized.

6. Helmet according to one of the preceding claims, **characterized in that** it comprises two lateral fingers whose axes are concurrent with those of the visors.

## Patentansprüche

1. Modularer Helm mit vereinfachter Montage des Typs mit einem nachgiebigen Basishelm (2), der am Kopf des Benutzers befestigt wird, und einem starren Modul (3), das den Basishelm bedeckt, mit drei Verbindungsvorrichtungen (4, 5, 6) zwischen dem Basishelm und dem Modul, wobei diese Verbindungsvorrichtungen in Form von Fingern (7, 8, 9) erscheinen, die mit dem Modul fest verbunden sind und mit entsprechenden Hülsen (10, 11, 12) in Eingriff kommen, die am Basishelm befestigt sind, wobei zwei dieser Verbindungsvorrichtungen (4, 5) seitlich angeordnet sind und eine andere (6) nahe dem Scheitel des Helms angeordnet ist, **dadurch gekennzeichnet, daß** die drei Verbindungsvorrichtungen eine Vorrichtung zum Blockieren einer Translation bezüglich des starren Moduls vom Vierteldrehungstyp aufweisen, daß die zwei seitlichen Verbindungsvorrichtungen eine Verbindung mit einem Längsspiel gewährleisten und daß die dritte eine translatorisch feststehende Verbindung gewährleistet.

2. Helm nach Anspruch 1, **dadurch gekennzeichnet, daß** das Längsspiel (C1, C2) ungefähr 1 mm in einer Richtung und ungefähr 4 bis 5 mm in der anderen Richtung beträgt.

3. Helm nach einem der vorangehenden Ansprüche, **dadurch gekennzeichnet, daß** die Enden (18) der seitlichen Finger eine Vorrichtung zum Blockieren einer Translation vom Vierteldrehungstyp (19-20-22) aufweisen.

4. Helm nach einem der vorangehenden Ansprüche, **dadurch gekennzeichnet, daß** in der entriegelten Position der obere Finger jegliches Anheben des Visiers des Helms (36) verhindert.

5. Helm nach einem der vorangehenden Ansprüche, **dadurch gekennzeichnet, daß** in der verriegelten Position die Finger gegen eine Drehung verriegelt sind.

6. Helm nach einem der vorangehenden Ansprüche, **dadurch gekennzeichnet, daß** er zwei seitliche Finger aufweist, deren Achsen mit jenen des Visiers zusammenfallen.
